## Europäisches Patentamt

## European Patent Office

## Office européen des brevets

(11) Veröffentlichungsnummer: **0 178 287**
A2

# EUROPÄISCHE PATENTANMELDUNG

(21) Anmeldenummer: 85890213.3

(51) Int. Cl.⁴: **G 06 F 13/42**

(22) Anmeldetag: 06.09.85

---

(30) Priorität: 09.10.84 AT 3210/84

(71) Anmelder: **VOEST-ALPINE Aktiengesellschaft, Friedrichstrasse 4, A-1011 Wien (AT)**

(43) Veröffentlichungstag der Anmeldung: **16.04.86 Patentblatt 86/16**

(72) Erfinder: **Schwingshakl, Gert, Dipl.-Ing., Grazer-Strasse 42A, A-8045 Graz/Andritz (AT)**

(84) Benannte Vertragsstaaten: **AT BE CH DE FR GB IT LI NL SE**

(74) Vertreter: **Haffner, Thomas M., Dr. et al, Patentanwaltskanzlei Dipl.-Ing. Adolf Kretschmer Dr. Thomas M. Haffner Schottengasse 3a, A-1014 Wien (AT)**

---

(54) Schaltungsanordnung zur Kontrolle der Datenfernübertragung.

(57) Eine Schaltungsanordnung (1) zur Kontrolle der Datenfernübertragung, welche zwischen einer Daten abgebenden und/oder empfangenden Einheit, beispielsweise einem Rechner (4) oder einem Endgerät (7), und einem mit einer Datenfernübertragungsleitung (6) verbindbaren Modem (5) angeordnet oder mit dem Modem (5) kombiniert ist, weist einen Datenpuffer, einen Programmspeicher, einen Mikroprozessor und einen Zeitgeber auf, wobei für den Anschluss der Daten abgebenden und/oder empfangenden Einheit eine serielle Standardschnittstelle (V24) und bei Verwendung eines gesonderten Modems (5) für den Anschluss desselben ebenfalls eine serielle Standardschnittstelle (V24) sowie zur Verbindung der seriellen Standarschnittstelle(n) mit dem Datenbus des Mikroprozessors ein Asynchron-Sender/Empfänger vorgesehen sind. Der Mikroprozessor steuert in Abhängigkeit vom Datenanfall eine zeichen- oder eine blockorientierte Übertragung unter Voraussetzung jeweils eines Synchronisierbits, wobei die Adressierungen im senderseitigen und im empfängerseitigen Datenpuffer synchron laufen und zur Angabe, wieviel einer empfangenen Meldung erkannt wurde, ein Zeichen ACK/NACK übertragen wird. Nach einer Anzahl K zu übertragender Zeichen sendet der Mikroprozessor ein Blockprüfzeichen BCC und bewirkt, falls zu sendende Zeichen im Pufferspeicher enthalten sind, die Übertragung bis zum K Zeichen sowie, falls keine richtige Meldung zuletzt empfangen wurde und das vorige Zeichen ein Blockprüfzeichen war, die Beendigung der Übertragung.

## Schaltungsanordnung zur Kontrolle der Datenfernübertragung

Die Erfindung betrifft eine Schaltungsanordnung zur Kontrolle der Datenfernübertragung, welche zwischen einer Daten abgebenden und/oder empfangenden Einheit, beispielsweise einem Rechner oder einem Endgerät, und einem mit einer Datenfernübertragungsleitung verbindbaren Modem angeordnet oder mit dem Modem kombiniert ist, mit einem Datenpuffer, einem Programmspeicher, einem Mikroprozessor und einem Zeitgeber.

Um asynchrone Terminals, die von sich aus kein Protokoll für Fehlererkennung und Fehlerkorrektur unterstützen, in einem größeren Maße in Anwendungen einzusetzen, wo eine derartige Fehlerbehandlung unumgänglich ist, besteht Bedarf an einem Interface, das einerseits eine Übertragung über eine Telefon-Wählleitung ermöglicht und anderseits diese Übertragung fehlerfrei gestaltet, indem auftretende Fehler durch Wiederholung der Übertragung selbsttätig korrigiert werden. An sich ist eine Übertragung auf Wählleitungen nur unter der Annahme der Fehlerfreiheit und unter Einhaltung spezieller Konventionen möglich. Bei einem früheren Vorschlag zur Behandlung von prozedurfreien asynchronen Terminals im Halbduplex-Verfahren mußten noch Komfortabstriche gemacht werden. Erwünscht wäre es, die Response- und Vollduplexeigenschaften am Terminal zu erhalten. Dann ließen sich besonders einfach und rechnerunabhängig Datensicherung und -verdichtung durchführen und das Übertragungsprotokoll würde somit zu einer sogar physikalisch abgetrennten Schicht.

Bei einem derartigen Vorhaben muß festgestellt werden, daß es durchaus Terminals gibt, die fehlerkorrigierend arbeiten und die an Wählleitungen anschließbar sind, doch sind diese Geräte prinzipiell herstellerspezifisch. Das Kriterium der Herstellerunabhängigkeit wurde aus diesen Gründen in den Vordergrund gestellt. Zu diesem oben genannten Argument kommen noch eine Reihe von weiteren Gründen hinzu, die den Einsatz von asynchronen Geräten ohne Protokoll rechtfertigen.

(a) Asynchrone Geräte sind bei sonst identischen, eventuell sogar höheren Fähigkeiten zu einem wesentlich geringeren Preis erhältlich, als für die Anschaffung protokollunterstützender Geräte notwendig ist.

(b) Es gibt kein herstellerunabhängiges Protokoll und somit auch keine herstellerunabhängige Möglichkeit, Terminals anzuschließen.

Damit ist die Entscheidung für ein protokollorientiertes Terminal bereits eine gewisse Fixierung auf Hersteller bzw. Herstellergruppen in die Zukunft. Auch wird ein eventueller Herstellerwechsel ungerechtfertigt erschwert.

(c) Ein Zusammenarbeiten verschiedener Institutionen ist nur unter Verwendung wohldefinierter Schnittstellen möglich. Aus vorgenannten Gründen ist ohne weitere Software (Übertragungssoftware) oft die asynchrone Fernschreiberschnittstelle die einzig mögliche. Als Beispiele seien verschiedenste Informationsdienste genannt, die über diese Schnittstelle nicht hinauskommen.

(d) Asynchrone Geräte ermöglichen die Übertragung von einzelnen Zeichen, während protokollorientierte Geräte in der Regel mit Blockstruktur arbeiten.

Von diesen Überlegungen ausgehend zielt die Erfindung darauf ab, eine Schaltungsanordnung der eingangs angegebenen Art zu schaffen, die unter der Nebenbedingung der größtmöglichen Antwortgeschwindigkeit - darunter sei hier die Möglichkeit, mit der ein eingetipptes Zeichen bis zum Verarbeitungselement wandert, verstanden - auch auf einzelne Zeichen eine "blockgesicherte" Übertragung zuläßt. Die Schaltungsanordnung soll über Telefonleitungen - das bedeutet einerseits im Wählleitungsbetrieb und anderseits unter Berücksichtigung der entsprechenden Antwort- und Auflegezeiten - angeschlossen werden können.

Mit dem Übertragungskonzept sollen die folgenden Aspekte zufriedenstellend abgedeckt werden:

(a) Response Delay soll möglichst kein sein. Unter Response Delay der Übertragung wird die Zeit ab dem Eintreffen im Übertragungslink bis zum Austritt aus dem Übertragungslink verstanden.

(b) Möglichkeit der Übertragung in beide Richtungen gleichzeitig. Es soll der Übertragungslink zumindest "aufnahmebereit" sein, während er gerade Daten empfängt.

(c) Unabhängige Übertragungsraten auf dem Link und auf den Enden. Wahlweise synchrone und asynchrone Übertragung auf dem Link.

(d) Overhead der Kontrolle soll gering sein.

(e) Overhead der Synchronisierung soll klein sein.

(f) Zeichen- bzw. blockorientierte Übertragung soll möglich sein ohne zusätzliche "Transmit" - Funktionssteuerung durch den Benutzer.

(g) Betreibbarkeit auf Wählleitungen.

Diese Überlegungen führten zu einem völlig von der übrigen Verarbeitung separierten Übertragungslink mit zwei an den Enden des Übertragungslinks liegenden Schaltungsanordnungen, bei welchen die Erfindung darin besteht, daß für den Anschluß der Daten abgebenden und/oder empfangenden Einheit eine serielle Standardschnittstelle und bei Verwendung eines gesonderten Modems für den Anschluß desselben ebenfalls eine serielle Standardschnittstelle sowie zur Verbindung der seriellen Standardschnittstelle(n) mit dem Datenbus des Mikroprozessors ein Asynchron-Sender/Empfänger vorgesehen sind, daß der Mikroprozessor in Abhängigkeit von Datenanfall eine zeichen- oder eine blockorientierte Übertragung unter Voransetzung jeweils eines Synchronisierbits steuert, wobei die Adressierungen im senderseitigen und im empfängerseitigen Datenpuffer synchron laufen und zur Angabe, wieviel einer empfangenden Meldung erkannt wurde, ein Zeichen ACK/NACK übertragen wird, und daß der Mikroprozessor weiters nach einer Anzahl K zu übertragender Zeichen ein Blockprüfzeichen BCC sendet und, falls zu sendende Zeichen im Pufferspeicher enthalten sind, die Übertragung bis zum K Zeichen bewirkt sowie, falls keine richtige Meldung zuletzt empfangen wurde und das vorige Zeichen ein Blockprüfzeichen war, die Beendigung der Übertragung bewirkt.

Eine Multipointkonfiguration wäre als Erweiterung vorstellbar, doch widerspricht sie der Bedingung (g) Betreibbarkeit auf Wählleitungen. Um den Bedingungen (a) der Minimierung des Response Delay und (e) zeichenorientierte Übertragung zu genügen, ist die Kommunikation zeichenorientiert. Sie wird jedoch auf blockorientiert umgeschaltet, falls eine entsprechende Datenintensität vorliegt. Die Blocklänge wird somit durch momentan zur Übertragung anstehende Zeichenmengen definiert. Diese ist nach oben hin durch eine Speicherkapazität des Übertragungslinks limitiert, da für den Fall der Retransmission die Daten in der Schaltungsanordnung verfügbar sein müssen.

Die Speicherkapazität des Datenpuffers der Schaltungsanordnung beträgt beispielsweise 128 Zeichen für den Eingang und 128 Zeichen für den Ausgang. In den logisch - nicht tatsächlich - getrennten Speichermodulen kann somit mit einer 1 Byte Adresse zyklisch adressiert werden. Es werden jeweils nur relevante Zeichen und keine Kontrollzeichen abgespeichert.

Blockprüfzeichen werden je nach Datenanfall, mindestens aber alle K Zeichen, eingestreut. K ist dabei eine konfigurierbare Größe, die von der tatsächlichen Übertragungsgeschwindigkeit abhängig sein wird. Typische Größen von K können aus Blockgrößen konventioneller Protokolle entnommen werden.

Der resultierende Response-Delay kann folgendermaßen angegeben werden:

$$R_D = 8(Z + 2) + S$$

Dabei ist S die Zeit für die Synchronisierung und Z die Zahl der unmittelbar hintereinander anfallenden Zeichen. Die Zahl 2 entsteht aus einem Zeichen ACK/NACK und einem Blockprüfzeichen BCC. Dieser Delay ist somit für den Fall, daß einzelne Zeichen übertragen werden, minimal. Die Angaben gelten für den Fall, daß nicht gerade in der Gegenrichtung Daten zur Übertragung anfallen. Diese würden ihn entsprechend vergrößern.

Um die Synchronisierungszeit S klein zu halten und um auf dem Link sowohl synchron als auch asynchron übertragen zu können, wurde eine Einbitsynchronisierung gewählt. Ein Neusynchronisieren ist im synchronen Übertragungsfall nicht notwendig, da dies durch das Modem automatisch vorgenommen wird.

Im Fall asynchroner Übertragung auf dem Link wurde ebenfalls ein einziges Synchronisierungsbit für einen gesamten Block als ausreichend erkannt, da für den Takt beiderseits der Steuerquarz des Mikroprozessors, der den Link betreibt, herangezogen wird und ein nahezu exaktes Triggern mit der Schaltflanke des Startbits bei einer Zykluszeit des Prozessors von etwa 1,6 µs und verwendeten Übertragungsraten von 1200 bzw. 2400 Bd möglich ist.

Die Erfindung wird nachfolgend an Hand der Zeichnung näher erläutert. Es zeigt: Fig.1 die wesentlichen Teile der erfindungsgemäßen Schaltungsanordnung ohne Schnittstellen; Fig.2 ein Beispiel für die verwendeten Schnittstellen im Falle einer synchronen Modemstrecke; Fig.3 ein Beispiel einer Signalübertragung; Fig.4 ein Blockschema zur Darstellung der Protokollbehandlung nach dem Stand der Technik; Fig.5 die erfindungsgemäße Verlagerung der Übertragungskontrolle vom Rechner oder Endgerät weg in die Modemstrecke; Fig.6 den Einbau der Übertragungskontrolle in das Modem; Fig.7 die Einbindung der Übertragungskontrolle als Zusatzgerät zum Modem, und Fig.8 eine Gegenüberstellung von Textblöcken verschiedener Übertragungsarten.

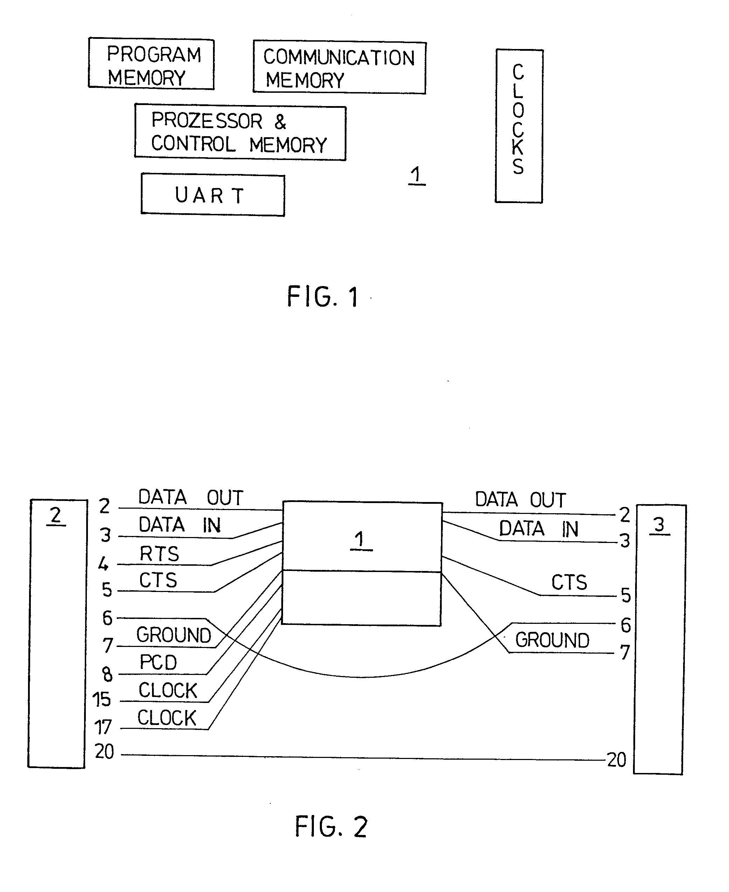

In Fig.1 sind die wesentlichen Teile der erfindungsgemäßen Schaltungsanordnung ohne Schnittstellen dargestellt und Fig.2 zeigt die im Zusammenhang mit der eigentlichen Steuereinheit 1 verwendeten Schnittstellen 2, 3 auf der asynchronen (transparenten) Seite bzw. auf der Seite der Fernübertragung. In dieser Figur wurde exemplarisch der Fall einer synchronen Modemstrecke gewählt.

Für das Zusammenstellen von zu übertragenden Nachrichten ergibt sich folgende Vorschrift:

(i)     Synchronisierung

(ii)    ACK/NACK Zeichen

(iii)   falls keine richtige Meldung zuletzt empfangen
        wurde     (v)

(iv)    falls Zeichen im Sendepuffer: transferiere bis zum
        K Zeichen

(v)     falls voriges Zeichen BCC     Ende

(vi)   BCC Blockprüfzeichen

(vii)      (iii)

Eine derartige Nachricht wird prinzipiell als Antwort auf eine falsche oder richtige Nachricht gesendet. Da nur auf richtige Meldungen mit echten Daten geantwortet wird, kann es nicht zu Konflikten kommen. Daher gilt jede Meldung als "richtig", die mindestens bis zum ersten BCC richtig war.

Das ACK/NACK Zeichen gibt an, wieviel der emfpangenen Meldung erkannt wurde. Dazu laufen die Adressierungen im Datenpuffer des Senders und im Datenpuffer des Empfängers synchron. Das ACK/NACK Zeichen ist dann die zyklische Adresse des letzten richtig empfangenen Zeichens. Somit übernimmt dieses Zeichen auch gleichzeitig die ENQ-Funktion. Die Möglichkeit eines Teilacknowledge ist dadurch ebenfalls gegeben.

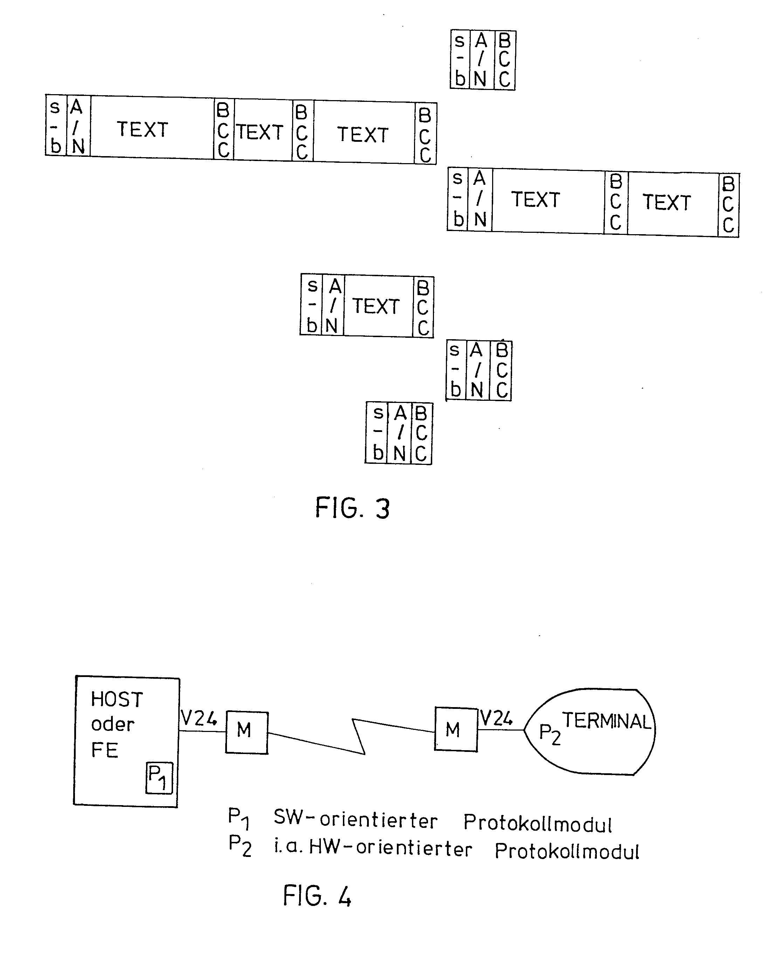

Um zu verhindern, daß die Übertragung stockt, bzw. um sie überhaupt in Gang zu bringen, wurde einer Station eine Timeoutaktivität zugeordnet. D.h. wenn keine Aktivität auf der Leitung ist, so sendet diese Timeoutaktivität einen Block aus. Dazu wird der terminalseitige Modul herangezogen, so daß rechnerseitig das Auftrennen der Verbindung durch das Modem im Wählleitungsbetrieb gesichert ist. Fig.3 stellt ein Beispiel einer Übertragung mit einem Konzept dar.

Die in Fig.4 schematisch dargestellte Protokollbehandlung nach dem Stand der Technik ist von der Übertragungsstrecke Modem-Leitung-Modem aus betrachtet, jeweils hinter der entsprechenden HW-Schnittstelle eingebunden. Derartige Schnittstellen sind üblicherweise vom Typ V 24. Seitens des Host ist diese Protokollbehandlung in das am weitesten außen liegende intelligente Element eingebunden. Es ist dies entweder ein Vorrechner oder der Host selbst. In allen Fällen ist die Erfüllung der Übertragungskonventionen, die Fehlererkennung und die Reaktion auf fehlerhafte Übertragung Software-
-Angelegenheit. In dieser Tatsache ist auch ein Grund zu
sehen, warum alle Hersteller nur "wenige" Protokolle seitens
der Vor- oder Hauptrechner unterstützen, da sonst der Softwareumfang gewaltig stiege.

Auf der Terminalseite ist die Übertragungslogik meist in die
Hardware des Terminals eingebunden. Somit wäre an dieser
Stelle ein Erstellen mehrerer Protokolle nicht nur ein
Zeitaufwand, sondern auch eine Änderung des Gerätes.

Durch die Erfindung wird an beiden Seiten die Erfüllung der
Übertragungskonventionen herausgelöst.

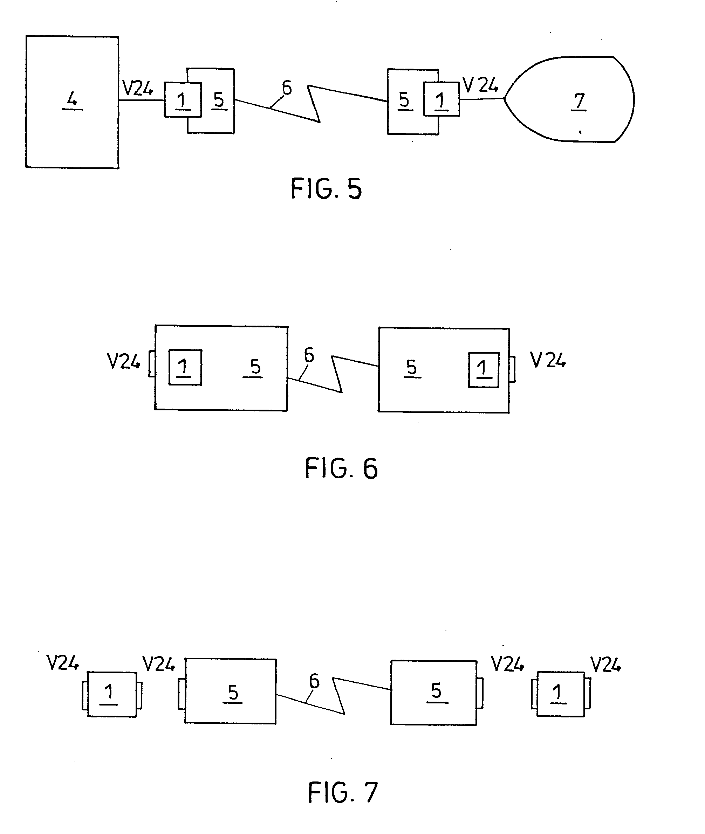

Dazu mußten die Anforderungen an das Terminal und an den
Rechner minimal gehalten werden. Sie wurden als ein reines
Zeichenübertragen (ohne zusätzliche Kontrolle) auf einer
synchronen seriellen Schnittstelle (V24) gewählt. Alle
weitere Intelligenz und Übertragungskontrolle wurde logisch
in die Modemstrecke (siehe auch Fig.5) eingebunden: Rechner 4
(Host oder FE), serielle Schnittstelle V24, Steuereinheit 1,
Modem 5, Übertragungsleitung 6, Modem 5, Steuereinheit 1,
serielle Schnittstelle V24, Endgerät 7.

Dieses Einbinden der erfindungsgemäßen Schaltungsanordnung in
die Strecke Modem-Leitung-Modem kann prinzipiell auf zwei
Arten geschehen:

(a) Einbau in das Modem (Fig.6).

Dadurch können die durch das Modem intern bereits aufbereiteten Signale verwendet werden. Zudem ist es nicht notwendig,
eine Anpassung der Signalpegel durch geeignete Schaltkreise
vorzunehmen.

(b) Einbindung als Zusatzgerät zum Modem (Fig.7).

In diesem Konzept verbleibt das Modem unverändert. Abgesehen von den oben genannten Aspekten muß noch beachtet werden, daß hier der Aufwand für Steckverbindungen, Gehäuse und eventuell notwendige Stromversorgung hinzukommt. Vom funktionellen Standpunkt aus gesehen sind beide Varianten identisch.

Das Ausgliedern der Übertragungskontrolle aus dem Komplex Zentralrechner bzw. aus dem Endgerät ist möglich, da die Kosten für eine programmierbare Steuereinheit, welche diese Funktionen übernehmen kann, sehr niedrig sind. So belaufen sich die reinen Hardwarekosten für die Einbindungsart (a) unter Zugrundelegung von Einzelstückkosten auf etwa DM 200,-. Im einzelnen besteht dieser Hardwareaufwand aus

- Mikroprozessor
- PROM 512 x 8
- 2 x (256 x 8) RAM (als 1024 x 4 realisiert)
- Asynchrone Schnittstelle

Zur weiteren Erläuterung der Erfindung werden eine Gegenüberstellung zu einem Point-to-Point-Protokoll herkömmlicher Art und eine Gegenüberstellung zur ungesicherten asynchronen Übertragung betrachtet. Es werden deshalb beide Vergleichsfälle diskutiert, weil durch die Erfindung die als positiv erkannten Eigenschaften der beiden Übertragungsarten kombiniert werden. Es werden unter "Durchsatzüberlegungen" zwei Aspekte erfaßt:

(a) Durchsatz (= Zeichen/Zeit) im Falle kontinuierlichen Datenanfalls

(b) Fortpflanzungsverzug eines einzelnen bzw. langsam eingetippten Zeichens.

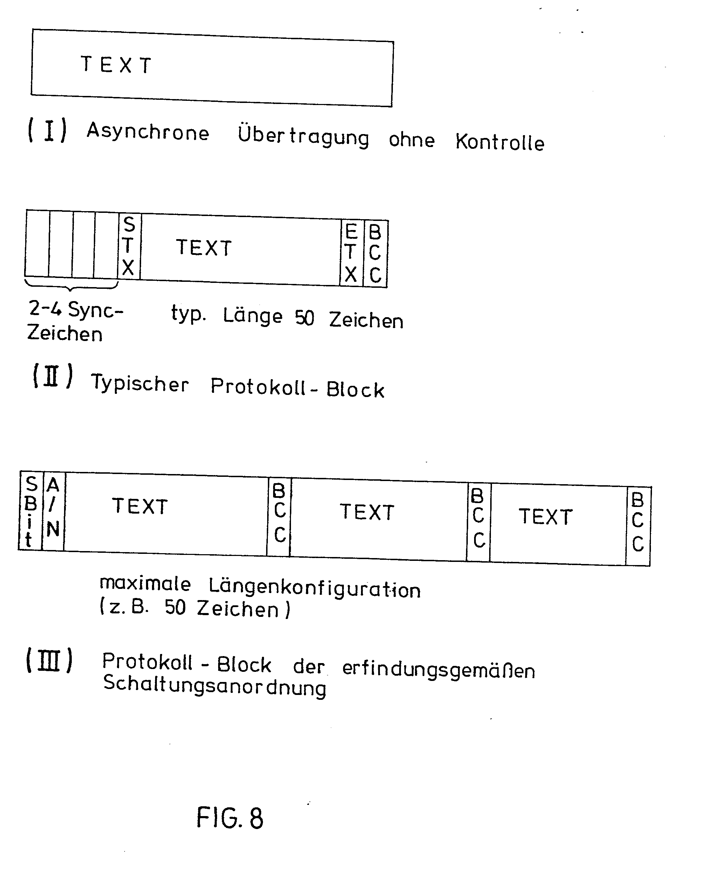

In Fig.8 sind die drei gegenüberzustellenden Übertragungen in ihren Datenübertragungsblöcken dargestellt.

Der Durchsatz im Fall I (asynchrone Übertragung) ist einfach ermittelbar. Sieht man von der Notwendigkeit ab, Kontrollzeichen für die Übertragungsrichtungssteuerung einzustreuen, so können in N Bitzeiten höchstens N/e Zeichen übertragen werden, daher ergibt sich e zu 1 + k + s mit k Zahl der Bits inklusive Paritybit pro Datenzeichen s der Stopbitbreite und 1 für das Startbit. Wird keine Einschränkung an anschließbare Geräte gemacht, so wird s mit zwei zu wählen sein. Dies ergibt bei einer Übertragungsrate von 2400 bit/s eine Übertragung von 13 091 Datenzeichen/min.

In den Fällen II und III sind zu den Übertragungszeiten noch die Umschaltungszeiten für den Richtungswechsel - zweimal pro Block - zur reinen Übertragungszeit hinzuzurechnen. Somit ergibt sich im Fall II unter der Annahme, daß ein Acknowledge aus ACK ETX BCC besteht, pro Block (= b Zeichen) ein Aufwand von:

(i)    zwei Modemschaltzeiten 20 - 200 ms

(ii)   2 x Synchronisation zu je 2 - 4 Zeichen =
       4 - 8 Sync-Zeichen.

(iii)  6 Kontroll- bzw. Blockprüfzeichen

(iv)   b Datenzeichen.

Unter der Annahme von 2400 bit/s und einer Schaltzeit von 100 ms sowie 3 Synczeichen pro Übertragung und einer typischen Datenzeichenzahl von 50 Zeichen ergeben sich 7377 Datenzeichen/min. Die Gleichstellung mit der asynchronen Übertragung ergibt sich erst bei einer Blocklänge von etwa 200 Zeichen/Block. Protokolle mit Pollingstruktur bzw. Multidropstruktur ergeben wesentlich ungünstigere Durchsatzzahlen. Zudem ist es nicht ohne weiteres möglich, die Zahl Zeichen/Block beliebig hinaufzusetzen, da dadurch die Retransmissionshäufigkeiten steigen und somit die Durchsätze sinken. Außerdem sind noch Aufforderungsdelays hinzuzurechnen, da bei einer Bedienung durch die Rechenanlage bzw. durch einen Front-Endrechner eine dauernde "Leerübertragung" nicht gerechtfertigt ist.

Der Fall III besitzt im Unterschied zu II ein 1 Bit-Synczeichen und ein 8 Bit ACK/NACK-Zeichen sowie ein BCC pro Teilblock. Dies ergibt bei 50 Zeichen/Teilblock einen Durchsatz von 14 139 Zeichen/min. Dies ergibt sich, da mehrere Teilblöcke hintereinander in einer Richtung übertragen werden. Bei einer Teilblocklänge von 10 Zeichen ergibt sich noch immer ein Durchsatz von 13 303 Zeichen/min. Anderseits ist durch das Teilblockacknowledge im Fehlerfall durch das zusätzliche Pufferelement "Übertragungseinheit" noch ein weiterer Ausgleich gegeben.

Der Punkt "Fortpflanzungsverzug" ist im Fall I klar eine Zeichenlänge, d.h. in der Situation "Leitung frei" 105 ms, wobei der Umschaltdelay eingerechnet ist. Der Fall II ist schwierig einzuordnen, da das Erkennen "Einzelzeichen" in der Regel nicht möglich ist. Derartige Geräte besitzen meist eine "TRANSMIT"-Taste, um diesem Konflikt und der Situation auf der Inputseite, lauter kleine ineffiziente und vom Front-End schwieriger zu behandelnde Blöcke zu besitzen, aus dem Wege zu gehen. Darüberhinaus ist an derartigen Geräten die Tastatur wesentlich öfter "gesperrt", in der Regel während jeder Inputübertragung bis zum Acknowledge. Im Fall III bedeutet der Übertragungsverzug eines einzelnen oder langsam eingetippten Zeichens den Verzug, der sich aus der Übertragung eines 1-Zeichenblocks ergibt. Das sind 217 ms. Wird die Eintippgeschwindigkeit bzw. Datenanfallgeschwindigkeit höher, so werden vorerst Teilblöcke zusammengefaßt, bis schließlich mehrere Zeichen in einem Teilblock zusammengefaßt werden. Daher ändern sich die mittleren Verzugszeiten nicht wesentlich, doch kann die maximale

0178287

- 12 -

Verzugszeit eines Zeichens bei Voll-Last auf etwa 850 ms steigen. Ein Sperren der Tastatur bzw. eine Nichtaufnahme der Eingabe tritt erst im Fehlerfall ein, wenn die Kapazität des Datenpuffers in der Übertragungseinheit nicht mehr ausreicht.

Unter Einstz hochintegrierter Bauelemente ist es möglich, mit minimalen Kosten der Problematik der Herstellerabhängigkeit auf dem Terminalsektor entgegenzutreten und Übertragungsformen einzurichten, die auf Modemübertragungsstrecken die Charakteristika direkt angeschlossener Geräte beibehalten. Diese Übertragungsmethode ist zwar, weil auf die asynchrone Schnittstelle abgestimmt, zeichenorientiert, ist im übrigen jedoch völlig transparent, d.h. es gibt kein Zeichen, das die Übertragungsstruktur stört oder von dieser verschluckt wird.

0178287

- 13 -

Patentanspruch:

Schaltungsanordnung (1) zur Kontrolle der Datenfernübertragung, welche zwischen einer Daten abgebenden und/oder empfangenden Einheit, beispielsweise einem Rechner (4) oder einem Endgerät (7), und einem mit einer Datenfernübertragungsleitung (6) verbindbaren Modem (5) angeordnet oder mit dem Modem (5) kombiniert ist, mit einem Datenpuffer, einem Programmspeicher, einem Mikroprozessor und einem Zeitgeber, dadurch gekennzeichnet, daß für den Anschluß der Daten abgebenden und/oder empfangenden Einheit eine serielle Standardschnittstelle (V24) und bei Verwendung eines gesonderten Modems (5) für den Anschluß desselben ebenfalls eine serielle Standardschnittstelle (V24) sowie zur Verbindung der seriellen Standardschnittstelle(n) mit dem Datenbus des Mikroprozessors ein Asynchron-Sender/Empfänger vorgesehen sind, daß der Mikroprozessor in Abhängigkeit vom Datenanfall eine zeichen- oder eine blockorientierte Übertragung unter Voransetzung jeweils eines Synchronisierbits steuert, wobei die Adressierungen im senderseitigen und im empfängerseitigen Datenpuffer synchron laufen und zur Angabe, wieviel einer empfangenen Meldung erkannt wurde, ein Zeichen ACK/NACK übertragen wird, und daß der Mikroprozessor weiters nach einer Anzahl K zu übertragender Zeichen ein Blockprüfzeichen BCC sendet und, falls zu sendende Zeichen im Pufferspeicher enthalten sind, die Übertragung bis zum K Zeichen bewirkt sowie, falls keine richtige Meldung zuletzt empfangen wurde und das vorige Zeichen ein Blockprüfzeichen war, die Beendigung der Übertragung bewirkt.

0178287

| PROGRAM MEMORY | COMMUNICATION MEMORY |

| PROZESSOR & CONTROL MEMORY |

| U A R T |

1

| C L O C K S |

## FIG. 1

2

2 ―――― DATA OUT ―――――――――― DATA OUT ―――― 2

3 ―――― DATA IN ――――――――――― DATA IN ―――― 3

4 ―――― RTS

5 ―――― CTS ――――――――――――― CTS ―――― 5

6 ――――

7 ―――― GROUND

8 ―――― PCD

15 ――― CLOCK

17 ――― CLOCK

20 ――――――――――――――――――――――― 20

1

6 ――――

GROUND ―――― 7

3

## FIG. 2

FIG. 3

FIG. 4

P₁   SW-orientierter   Protokollmodul
P₂   i.a. HW-orientierter   Protokollmodul

FIG. 5

FIG. 6

FIG. 7

```
┌──────────────────────────────────┐
│                                  │
│   T E X T                        │
│                                  │
└──────────────────────────────────┘
```

( I ) Asynchrone Übertragung ohne Kontrolle

```
┌──┬──┬──┬──┬─┬──────────┬─┬─┐
│  │  │  │  │S│          │E│B│
│  │  │  │  │T│  TEXT    │T│C│
│  │  │  │  │X│          │X│C│
└──┴──┴──┴──┴─┴──────────┴─┴─┘
```
2-4 Sync-          typ. Länge 50 Zeichen
Zeichen

( II ) Typischer Protokoll - Block

```
┌─┬─┬────────┬─┬────────┬─┬────────┬─┐
│S│A│        │B│        │B│        │B│
│B│/│  TEXT  │C│  TEXT  │C│  TEXT  │C│
│i│N│        │C│        │C│        │C│
│t│ │        │ │        │ │        │ │
└─┴─┴────────┴─┴────────┴─┴────────┴─┘
```
        maximale Längenkonfiguration
        (z. B. 50 Zeichen )

( III )  Protokoll - Block der erfindungsgemäßen
         Schaltungsanordnung

FIG. 8